# EUROPÄISCHE PATENTSCHRIFT

(11) **EP 1 624 156 B1**
(45) Veröffentlichungstag und Bekanntmachung des Hinweises auf die Patenterteilung: **30.09.2015**
(21) Anmeldenummer: 04018498.8
(22) Anmeldetag: 04.08.2004
(51) Int. Cl.: F01D 5/06, F01D 25/24, B23K 9/04, F01D 25/00, F01D 5/00

(54) **Gas- oder Dampfturbine mit einer beanspruchungsresistenten Komponente**
Gas or steam turbine with a stress-resistant component
Turbine à gaz ou à vapeur avec composant résistant aux contraintes

(43) Veröffentlichungstag der Anmeldung: 08.02.2006
(73) Patentinhaber: Siemens Aktiengesellschaft, 80333 München (DE)
(72) Erfinder: Schmitz, Friedhelm, 46537 Dinslaken (DE)

(56) Entgegenhaltungen:
- EP-A- 0 202 793
- WO-A-2004/051056
- DE-A- 4 433 891
- FR-A- 2 606 707
- US-A- 5 172 475
- MAGOSHI R ET AL: "Development and Operating E xperience of Welded Rotors for High-temperature Steam Turbines" PROCEEDINGS OF INTERNATIONAL JOINT POWER GENERATION CONFERENCE, XX, XX, 23. Juli 2000 (2000-07-23), Seiten 1-6, XP002298811

## Beschreibung

Die Erfindung betrifft ein Verfahren zum Herstellen einer beanspruchungsresistenten Komponente für eine Gas- oder Dampfturbine, mit den Schritten: Bereitstellen von mindestens zwei Teilkomponenten und Verbinden der beiden Teilkomponenten durch eine Fertigungsschweißung an einer Verbindungsstelle. Ferner betrifft die Erfindung allgemein das Gebiet der Verbesserung der Warmfestigkeit von oben genannten Komponenten.

Gas- oder Dampfturbinen sind großvolumige Maschinen, deren Komponenten und insbesondere deren Gehäuse und Ventile ebenfalls vergleichsweise groß sind und für deren Herstellung demnach auch vergleichsweise viel Material verbraucht wird.

Damit die Komponenten den hohen thermischen und thermomechanischen Beanspruchungen an einer Gas- oder Dampfturbine auch über die lange Betriebsdauer dieser Maschinen hinweg stets standhalten, müssen die Komponenten insgesamt aus hochwertigen Werkstoffen hergestellt werden. Der Anteil der Materialkosten an den Herstellungskosten ist daher bei Gas- oder Dampfturbinen-Komponenten besonders hoch.

Aufgabe der Erfindung ist es, Komponenten von Gas- oder Dampfturbinen und insbesondere Gas- oder Dampfturbinen-Gehäuse und/oder -Ventile bereitzustellen, die den hohen thermischen und thermomechanischen Beanspruchungen gewachsen sind, die aber dennoch im Vergleich zu bekannten Komponenten kostengünstig hergestellt werden können.

Die Aufgabe ist erfindungsgemäß mit einem eingangs genannten Verfahren gemäß Anspruch 1 gelöst, das ferner durch die folgenden Schritte gekennzeichnet ist: Ausgestalten der beiden Teilkomponenten derart, dass ihre Verbindungsstelle in einem Bereich zu liegen kommt, in dem an der Oberfläche der späteren Komponente hohe Beanspruchungen entstehen und Ausführen der Fertigungsschweißung mit einem Schweißzusatzstoff mit erhöhter Festigkeit an der Verbindungsstelle. Darüber hinaus ist die Erfindung auch mit beanspruchungsresistenten Komponenten für eine Gas- oder Dampfturbine, gelöst, die nach einem der oben genannten Verfahren hergestellt sind.

Die Erfindung steht im Gegensatz zu bekannten Verfahren zur Herstellung von Komponenten einer Gas- oder Dampfturbine, bei denen ebenfalls Teilkomponenten durch Fügeverfahren, wie z.B. Schweißen verbunden sind. Gemäß Anspruch 4 wird an einer Stelle erhöhter Beanspruchung eine resistente Schicht hergestellt, indem bereits während der Konstruktion der Teilkomponenten die' spätere Beanspruchung auch in fertigungstechnischer Hinsicht berücksichtigt wird und gezielt Fertigungsschweißnähte oder Auftragsschweißungen in Bereiche gelegt werden, in denen dann später insbesondere eine hohe thermische Beanspruchung besteht. Die Fertigungsschweißnähte werden schließlich mit einem Schweißzusatzstoff hergestellt, wodurch nahezu kostenneutral einzelne Bereiche hoher thermischer und thermomechanischer Resistenz ausgebildet werden können.

Mit anderen Worten wird erfindungsgemäß eine Komponente bzw. ein Bauteil einer Gas- oder Dampfturbine für die Herstellung durch Schmieden (z.B. eine Welle) oder Giesen (z.B. ein Gehäuse oder Ventil) konstruktiv so angelegt, dass dort, wo später hohe Beanspruchungen vorliegen, nach dem Schmieden oder Gießen örtlich eine Fertigungsschweißung mit einem Schweißzusatzstoff mit deutlich erhöhter Festigkeit ausgeführt wird.

Die Aufgabe ist ferner gemäß Anspruch 8 durch Verwenden des Schrittes Auftragsschweißen eines Materials erhöhter Festigkeit an einer beanspruchungsresistenten Komponente einer Gas- oder Dampfturbine gelöst, zum Herstellen eines Bereichs der beanspruchungsresistenten Komponente, an dem die beanspruchungsresistente Komponente bei einer Low Cicle Fatigue-Beanspruchung besonders beansprucht ist.

Unter Low Cicle Fatigue-Beanspruchung wird in diesem Zusammenhang eine Beanspruchung verstanden, bei der die Komponente mehrmals hintereinander nur für kurze Zeit betrieben wird und daher hohen Temperaturschwankungen ausgesetzt ist. Mit diesen Temperaturschwankungen sind im Material der Komponenten hohe Temperaturgradienten verbunden. So kann beispielsweise an der Außenseite der Komponente konstant eine Temperatur von 20 °C vorliegen, während an ihrer Innenseite die Temperatur je nach Betriebszustand kurzfristig zwischen 600 °C und 50 °C schwanken. Bei bekannten Komponenten ergeben sich bei solchen Belastungen teilweise Schäden, denn die Spannungen im Material übersteigen dessen Streckgrenze und führen so zu plastischen Verformungen. Erfindungsgemäß werden hingegen gezielt Bereiche geschaffen, die dieses Problem vermeiden und in denen die Komponente gegen Thermowechseldehnungen besonders geschützt ist. So beträgt beispielsweise die Dehnwechselfestigkeit Δε für 3000 Lastwechsel von 1 % CrMoV-Stahl bei 500 °C 0,5 % und bei 600 °C 0,3 %. Bei einem Ni-Basis-Material liegen diese Werte hingegen bei 1 % bzw. 0,7 %.

Erfindungsgemäß wird damit gezielt die Technik des Auftragsschweißens genutzt, um Bereiche herzustellen, in denen die Komponente besonders gegen Low Cicle Fatigue geschützt ist. Auftragsschweißen wird bisher lediglich als Schutz vor Abrasion oder Korrosion, nicht aber bei thermischen Spannungen im Material selbst verwendet.

Die erfindungsgemäße Fertigungsschweißung bzw. Auftragsschweißung wird besonders vorteilhaft mit einem Schweißzusatzstoff aus einer Nickel-Basis-Legierung ausgeführt.

Die mindestens eine Teilkomponente sind dann kostengünstig aus einer 1% CrMo- bzw. CrMoV-Legierung hergestellt, der für die größten Bereiche der Komponente eine völlig ausreichende Festigkeit besitzt. Bei bekannten Komponenten muss hingegen z.B. ein 10 % Cr-Stahl für die gesamte Komponente verwendet werden. Die erfindungsgemäße Fertigungsschweißung bzw. Auftragsschweißung mit einem höherwertigen Werkstoff an insbesondere thermisch höchst beanspruchten Stellen führt damit insgesamt zu einer kostengünstigeren Lösung, weil die nur geringfügig teureren Schweißungen die Kostenvorteile des billigeren Werkstoffes nicht wesentlich mindern.

Nachfolgend wird ein Ausführungsbeispiel eines erfindungsgemäßen Verfahrens zum Herstellen einer beanspruchungsresistenten Gas- oder Dampfturbinen-Komponente anhand der beigefügten schematischen Zeichnung näher erläutert. Es zeigt:
Fig. 1 einen Längsschnitt eines Ausführungsbeispiels einer erfindungsgemäß hergestellten Gasturbine,
Fig. 2 teilweise einen Schnitt einer ersten Komponente der Gasturbine gemäß Fig. 1,
Fig. 3 teilweise einen Schnitt einer zweiten Komponente der Gasturbine gemäß Fig. 1 und
Fig. 4 teilweise einen Schnitt einer dritten Komponente der Gasturbine gemäß Fig. 1.

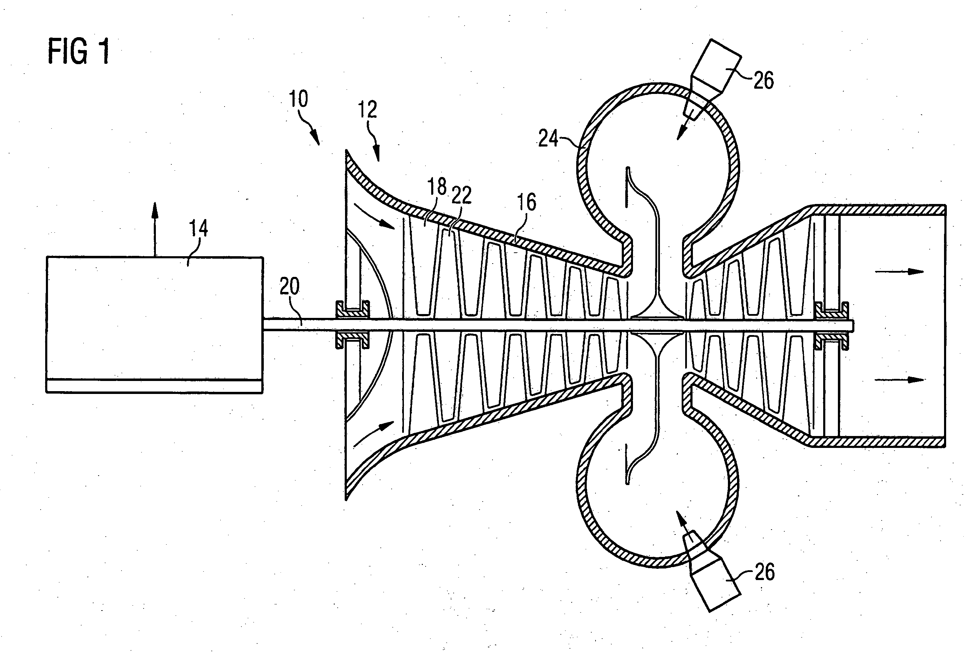

In der Fig. 1 ist schematisch eine Gasturbinen-Anlage 10 mit einer Gasturbine 12 und einem Generator 14 dargestellt. Die Gasturbine 12 weist ein Gehäuse 16 auf, in dem feststehende Leitschaufeln 18 und an einem Rotor 20 angeordnete Laufschaufeln 22 angeordnet sind. Am Gehäuse 12 befindet sich ferner ein Brennkammergehäuse 24, in das durch Brenner 26 Brennstoff eingespritzt werden kann. Der Brennstoff wird in bekannter Weise mit der von der Gasturbine 12 eingangsseitig verdichteten Luft verbrannt und treibt dann ausgangsseitig den Rotor 20 der Gasturbine 12 und den damit Drehmoment übertragend verbundenen Generator 14 an.

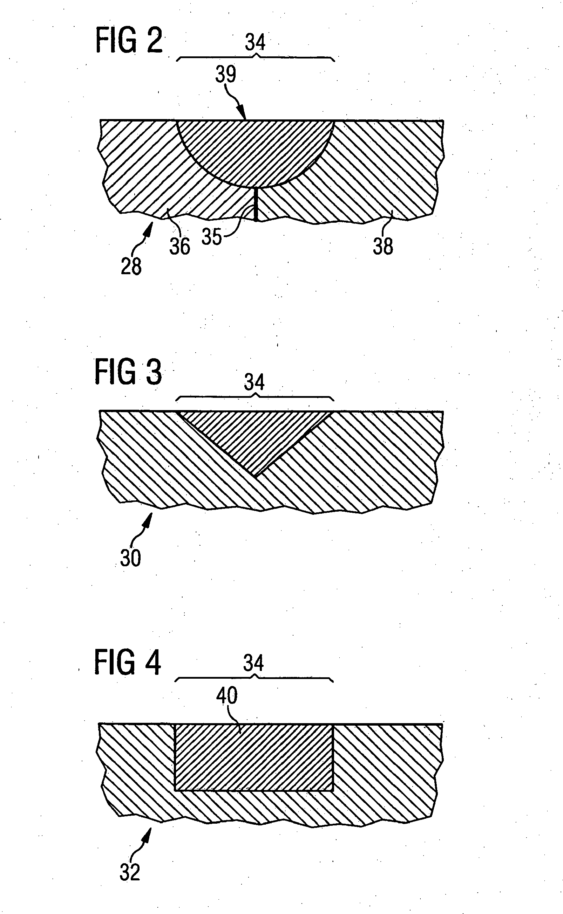

Die Fig. 2 bis 4 zeigen drei beanspruchungsresistente Komponenten 28, 30 bzw. 32 des Gehäuses 16 der Gasturbine 12 gemäß Fig. 1, deren Oberfläche während des Betriebs der Gästurbine 12 jeweils thermisch und thermomechanisch (insbesondere durch eine Low Cicle Fatigue-Beanspruchung) besonders stark beansprucht ist. Eine solche Beanspruchung ist besonders hoch, wenn sich in dem in den Fig. 2 bis 4 dargestellten Bereich beispielsweise ferner eine Stufe oder Kerbe befindet.

Damit die Komponenten 28, 30 bzw. 32 vergleichsweise kostengünstig hergestellt werden können und dennoch den hohen Beanspruchungen während des Betriebs der Gasturbine 12 standhalten, sind sie aus einem vergleichsweise geringwertigen Werkstoff gegossen und darüber besonders behandelt, damit an der Oberfläche der Komponenten 28, 30 und 32 jeweils Gebiete 34 erhöhter Festigkeit geschaffen werden.

Bei der in Fig. 2 dargestellten Komponente 28 ist diese Komponente 28 im zu schaffenden Gebiet 34 erhöhter Festigkeit gezielt an einer Verbindungsstelle 35 geteilt konstruiert, so dass dort zwei Teilkomponenten 36 und 38 aneinandergrenzen. Die Teilkomponenten 36 und 38 sind aus einem vergleichsweise geringwertigen Werkstoff aus einer 1 % CrMo- bzw. CrMoV-Legierung gegossen und durch eine Fertigungsschweißung bzw. Fertigungsschweißnaht 39 mit einem Schweißzusatzstoff aus einer Nickel-Basis-Legierung verbunden.

Bei der in Fig. 3 dargestellten Komponente 30 ist beim Gießen dieser Komponente 30 eine im Querschnitt dreieckige Vertiefung ausgebildet worden, in die nachfolgend eine Auftragsschweißung mit einem Material erhöhter Festigkeit eingebracht worden ist. Dadurch ist insbesondere die Festigkeit der Oberfläche des Gebiets 34 bei einer Low Cicle Fatigue-Beanspruchung verbessert worden.

Bei der in Fig. 4 dargestellten Komponente 32 ist schließlich beim Gießen eine im Querschnitt rechteckige Vertiefung ausgebildet worden, in die ebenfalls eine Auftrags- bzw. Eintragsschweißung mit einem höherwertigen Material eingebracht worden ist. Bei der fertigen Komponente 32 kommt die Oberkante der Auftragsschweißung auf der Höhe der restlichen Oberfläche im Gebiet 34 zu liegen und schafft dort eine vergleichsweise beanspruchungsresistente Fläche, die in überraschender Weise insbesondere die Warmfestigkeit des Materials bei einer Low Cicle Fatigue-Beanspruchung erhöht.

## Patentansprüche

1. Verfahren zum Herstellen einer beanspruchungsresistenten Komponente (28)
für eine Gas- oder Dampfturbine (12),
mit den Schritten:
- Bereitstellen von mindestens zwei Teilkomponenten (36, 38) und
Verbinden der beiden Teilkomponenten (36, 38) durch eine Fertigungsschweißung an einer Verbindungsstelle,
- Ausgestalten der beiden Teilkomponenten (36, 38) derart, dass ihre Verbindungsstelle (35) in einem Bereich (34) zu liegen kommt, in dem an der Oberfläche der späteren Komponente (28) hohe Beanspruchungen entstehen,
Ausführen der Fertigungsschweißung (39) mit einem Schweißzusatzstoff mit erhöhter Festigkeit an der Verbindungsstelle (35), und
- Ausbilden mindestens einer der Teilkomponenten (36, 38) aus einer 1%igen CrMo-Legierung.

2. Verfahren nach Anspruch 1,
**gekennzeichnet durch**
den Schritt: Gießen und/oder Schmieden der beiden Teilkomponenten (36, 38) vor dem Verbinden **durch** die Fertigungsschweißung (39) mit dem Schweißzusatzstoff.

3. Verfahren nach Anspruch 1 oder 2,
**gekennzeichnet durch**
den Schritt: Ausführen der Fertigungsschweißung (39) mit einem Schweißzusatzstoff aus einer Nickel-Basis-Legierung.

4. Beanspruchungsresistente Komponente (28)
für eine Gas- oder Dampfturbine (12),
welche aus mindestens zwei Teilkomponenten (36, 38) aufgebaut ist,
die durch eine Fertigungsschweißung an einer Verbindungsstelle miteinander verbunden sind,
die beiden Teilkomponenten (36, 38) derart gestaltet sind, dass ihre Verbindungsstelle (35) in einem Bereich (34) zu liegen kommt, in dem an der Oberfläche der Komponente (28) hohe Beanspruchungen entstehen und
die Verbindungsstelle (35) bei der Fertigungsschweißung (39) mit einem Schweißzusatzstoff mit erhöhter Festigkeit ausgeführt ist, wobei
mindestens eine der Teilkomponenten (36, 38) aus einer 1%igen CrMo-Legierung hergestellt ist.

5. Beanspruchungsresistente Komponente nach Anspruch 4,
**dadurch gekennzeichnet, dass**
sich in dem Bereich (34) eine Stufe oder Kerbe befindet.

6. Beanspruchungsresistente Komponente nach Anspruch 4 oder 5,
**dadurch gekennzeichnet, dass**
die Teilkomponenten (36, 38) vor dem Verbinden durch die Fertigungsschweißung (39) mit dem Schweißzusatzstoff gegossen und/oder geschmiedet sind.

7. Beanspruchungsresistente Komponente nach Anspruch 4, 5 oder 6,
**dadurch gekennzeichnet, dass**
der Schweißzusatzstoff eine Nickel-Basis-Legierung ist.

8. Verwenden des Schrittes Auftragsschweißen eines Materials erhöhter Festigkeit an einer beanspruchungsresistenten Komponente (30, 32) einer Gas- oder Dampfturbine (12), zum Herstellen eines Bereichs (34) der beanspruchungsresistenten Komponente (30, 32), an dem die beanspruchungsresistente Komponente (30, 32) bei einer Low Cicle Fatigue-Beanspruchung besonders beansprucht ist,
wobei die Komponente (30, 32) aus einer 1%igen CrMo-Legierung hergestellt ist.:

9. Verwendung nach Anspruch 8,
wobei beim Gießen der beanspruchungsresistenten Komponente (30, 32,) eine im Querschnitt rechteckige oder dreieckige Vertiefung ausgebildet wird, in die die Auftragsschweißung eingebracht wird.

## Claims

1. Method for producing a stress-resistant component (28) for a gas turbine or steam turbine (12),
with the steps of:
- preparing at least two part components (36, 38) and
- connecting the two part components (36, 38) by means of a manufacturing weld at a connection point,
- configuring the two part components (36, 38) such that their connection point (35) comes to be positioned in a region (34) which, on the surface of the later component (28), will be subjected to high stresses,
- making the manufacturing weld (39) with a filler with increased strength at the connection point (35), and
- forming at least one of the part components (36, 38) from a 1% CrMo alloy.

2. Method according to Claim 1,
**characterized by**
the step of: casting and/or forging the two part components (36, 38) prior to connection by means of the manufacturing weld (39) with the filler.

3. Method according to Claim 1 or 2,
**characterized by**
the step of: carrying out the manufacturing weld (39) with a filler made of a nickel-based alloy.

4. Stress-resistant component (28)
for a gas turbine or steam turbine (12),
which is constructed from at least two part components (36, 38)
which are connected to one another by means of a manufacturing weld at a connection point,
the two part components (36, 38) are configured such that their connection point (35) comes to be positioned in a region (34) which, on the surface of the component (28), will be subjected to high stresses, and
the connection point (35) for the manufacturing weld (39) is made with a filler with increased strength, wherein
at least one of the part components (36, 38) is produced from a 1% CrMo alloy.

5. Stress-resistant component according to Claim 4,
**characterized in that**
a step or chamfer is located in the region (34).

6. Stress-resistant component according to Claim 4 or 5,
**characterized in that**
the part components (36, 38) are cast and/or forged prior to connection by means of the manufacturing weld (39) with the filler.

7. Stress-resistant component according to Claim 4, 5 or 6,
**characterized in that**
the filler is a nickel-based alloy.

8. Use of the step of deposition welding a material having increased strength onto a stress-resistant component (30, 32) of a gas turbine or steam turbine (12), for producing a region (34) of the stress-resistant component (30, 32) at which the stress-resistant component (30, 32) is subjected to particularly high loads in low-cycle fatigue loading,
wherein the component (30, 32) is produced from a 1% CrMo alloy.

9. Use according to Claim 8,
wherein a depression of rectangular or triangular cross section is formed when casting the stress-resistant component (30, 32), into which depression the deposition welding is introduced.

## Revendications

1. Procédé de fabrication d'une pièce ( 28 ) résistant aux contraintes,
pour une turbine ( 12 ) à gaz ou à vapeur,
comprenant les stade
- on se procure au moins deux sous-pièces ( 36, 38 ) et
- on relie les deux sous-pièces ( 36, 38 ) par une soudure de fabrication en un point de liaison,
- on conforme les deux sous-pièces ( 36, 38 ) de manière à ce que leur point ( 35 ) de liaison vienne dans une région ( 34 ) dans laquelle de grandes contraintes se créent à la surface de la pièce ( 28 ) ultérieure.
- on réalise la soudure ( 39 ) de fabrication au point ( 35 ) de liaison avec un métal d'apport ayant une résistance élevée et
- on forme au moins l'une des sous-pièces ( 36, 38 ) en un alliage de CrMo à 1 %.

2. Procédé de fabrication suivant la revendication 1, **caractérisé par** le stade : coulée et/ou forgeage des deux sous-pièces ( 36, 38 ) avant la liaison par la soudure ( 39 ) de fabrication avec le métal d'apport.

3. Procédé de fabrication suivant la revendication 1 ou 2, **caractérisé par** le stade : on réalise la soudure ( 39 ) de fabrication avec un métal d'apport en un alliage à base de nickel.

4. Pièce ( 28 ) résistant aux contraintes pour une turbine ( 12 ) à gaz ou à vapeur, qui est formée d'au moins deux sous-pièces ( 36, 38 ),
qui sont reliées l'une à l'autre par une soudure de fabrication en un point de liaison,
les deux sous-pièces ( 36, 38 ) sont conformées de manière à ce que leur point ( 35 ) de liaison vienne dans une région dans laquelle de grandes contraintes se créent à la surface de la pièce ( 28 ) et le point ( 35 ) de liaison est réalisé lors de la soudure ( 39 ) de fabrication avec un métal d'apport de résistance élevée,
dans laquelle au moins l'une des sous-pièces ( 36, 38 ) est fabriquée en un alliage de CrMo à 1 %.

5. Pièce résistant aux contraintes suivant la revendication 4,
**caractérisée en ce que**
un gradin ou une encoche se trouve dans la région ( 34 ).

6. Pièce résistant aux contraintes suivant la revendication 4 ou 5,
**caractérisée en ce que**
les sous-pièces ( 36, 38 ) sont coulées et/ou forgées avant la liaison par la soudure ( 39 ) de fabrication avec le métal d'apport.

7. Pièce résistant aux contraintes suivant la revendication 4, 5 ou 6,
**caractérisée en ce que**
le métal d'apport est en alliage à base de nickel.

8. Utilisation du stade de soudure avec apport d'un matériau de résistance élevée sur une pièce ( 30, 32 ) résistant aux contraintes d'une turbine ( 12 ) à gaz ou à vapeur pour produire une région ( 34 ) de la pièce ( 30, 32 ) résistant aux contraintes où la pièce ( 30, 32 ) résistant aux contraintes est sollicitée particulièrement lors d'une sollicitation low cicle fatigue,
dans laquelle la pièce ( 30, 32 ) est fabriquée en un alliage de CrMo à 1 %.

9. Utilisation suivant la revendication 8,
dans laquelle, lors de la coulée de la pièce ( 30, 32 ) résistant aux contraintes, il est formé une cavité de section transversale rectangulaire ou triangulaire, dans laquelle la soudure avec apport est introduite.
